# EUROPEAN PATENT SPECIFICATION

(11) **EP 2 779 489 B1**
(45) Date of publication and mention of the grant of the patent: **27.11.2019**
(21) Application number: 13158831.1
(22) Date of filing: 12.03.2013
(51) Int. Cl.: H04J 3/06, H04W 56/00

(54) **Method for selecting a network clock of a local synchronization domain of a mobile network as a frequency synchronization gateway**
Verfahren zur Wahl eines Netztakts einer lokalen Synchronisierungsdomäne eines Mobilfunknetzes als Frequenzsynchronisation Gateway
Procédé de sélection d'une horloge réseau dans un domaine de synchornisation locale d'un réseau mobile comme un gateway de la fréquence de synchronisation

(43) Date of publication of application: 17.09.2014
(73) Proprietor: Alcatel Lucent, 91620 Nozay (FR)
(72) Inventor: Le Pallec, Michel, 91620 Nozay (FR); Bui, Dinh Thai, 91620 Nozay (FR)
(74) Representative: Camus, Olivier Jean-Claude

(56) References cited:
- EP-A1- 2 073 403
- EP-A2- 0 450 828
- WO-A1-2012/001114
- WO-A2-01/43317

## Description

### Technical field

The present invention relates to mobile networks, and more precisely to the distribution of a frequency reference to network clocks of such mobile networks.

In the following description the term "master clock" refers to a GrandMaster clock or a Master port, the term "network element" refers to a network element not performing clock reference recovery and distribution functions (i.e. it could be a network element not aware of the packet-based synchronization technology(ies) considered or a network element supporting the PTPV2 "transparent" clock capability), and the term "network clock" refers to a network element having a local clock and performing clock reference recovery and distribution functions. Moreover, the term "clock dataset" refers to intrinsic clock features and configuration parameters especially dedicated to the construction of an optimized hierarchical synchronization topology.

EP2073403 discloses a method to synchronize a plurality of distant nodes.

### Background of the invention

Within mobile networks, two main families of synchronization technologies are available for distributing a frequency reference to wireless base stations (or BTSs).

The first family is represented by SyncE (or "Synchronous Ethernet") and its legacy TDM counterpart E1/T1/SDH/SONET. This first family relies on the physical layer signal to distribute a frequency reference of a Primary Reference Clock (i.e. ITU-T G.811 a.k.a. PRC/PRS) in a link-by-link (or "hop-by-hop") basis. This frequency reference is recovered at each network clock thanks to a standardized and specified local clock deployed at each network element level. Synchronization technologies of this first family have proven to be very robust and accurate across large networks (they are able to guarantee the well-known 50 ppb frequency accuracy required by major wireless technologies).

However, these robust synchronization technologies present an important weakness. Indeed, they implement a hop-by-hop method (that requires the clock to be recovered at each network element), with self-healing capabilities, and therefore imply a significant deployment cost due to specific hardware required at each network element. This high deployment cost raises concern amongst mobile operators while they are looking for cost-efficient approaches (CAPEX/OPEX). As a consequence, link-by-link/hop-by-hop synchronization technologies are not always the best candidate for the distribution of a frequency reference.

The second family is represented by timestamped protocols, such as IEEE 1588V2 (also called PTPV2) or IETF NTP. This second family relies on a packet-based signaling to distribute the frequency reference of a master clock. Additionally to its ability to support a link-by-link scheme, PTPV2 can be also deployed in an end-to-end scheme with no intermediate clock recovery, the crossed network elements being transparent to the PTPV2 protocol. Regarding its end-to-end distribution capability, this technology family presents a clear deployment cost advantage over the aforementioned physical layer based technologies (deployed in a link-by-link scheme).

Nevertheless, unlike physical-layer-based synchronization technologies, the performance of PTPV2, when deployed in an end-to-end scheme, depends on the network noise, and especially on the packet delay variation (or PDV) experienced by PTPV2 synchronization messages, which depends on the traffic load, and on slave clock characteristics for achieving a given frequency accuracy. More precisely this second family raises:
- a performance concern, especially when considering already deployed base stations presenting local oscillators not suitable for meeting the 50 ppb frequency requirement at the radio interface, with respect to the end-to-end network noise,
- a bandwidth concern, when considering multiple unicast synchronization flows that must be issued by the master clock (for supporting a default unicast mode such as recommended by the ITU-T PTP frequency Telecom profile (G.8265.1). This tremendously increases the bandwidth usage (because the number of legacy BTSs is very important), especially for network links closest to the PTP master clock,
- a scalability concern as the master clock serves multiple slave clocks (generally thousands), and increasing the slave clock number increases the load the master clock has to support.

An hybrid solution has been proposed to improve the situation. It consists in a combination of an end-to-end deployment in a first synchronization domain and a link-by-link deployment in at least one second synchronization domain. Such a solution requires a demarcation point or gateway between the first and second synchronization domains. Actually, this demarcation point or gateway is chosen arbitrarily and statically, which does not ensure an optimal deployment solution in terms of cost and performance. Indeed, the PDV induced by non-PTP aware network elements and the clock quality of the assigned PTP slave clock within the gateway cannot guarantee optimal frequency accuracy and stability while other selectable slave clocks may offer better [accumulated PDV, clock quality] couples, yielding to a better frequency accuracy of downstream clocks and thus to a better base station performance (notably reducing call drops).

Moreover, this lack of optimization could impact the distribution of a very accurate time reference (< 1 µs) as this latter requires the distribution of an accurate frequency (for instance targeting a 1 µs time accuracy for Time Duplex Division (or TDD) base stations often requires a stringer frequency accuracy of approximately 1 ppb). This strict requirement raises some concerns in terms of protection (notably when the assigned gateway fails), of flexibility (notably when changes occurs in the network environment and/or the synchronization environment), of performance (notably because generally the network operator has not a clear view of the characteristics of the assigned clock and of the network PDV), of and operations.

### Summary of the invention

So the invention aims notably at optimizing frequency synchronization of base stations of a mobile network comprising a combination of an end-to-end deployment and a link-by-link/hop-by-hop deployment.

To this effect the invention notably provides a method, intended for automatically selecting a first network clock of a mobile network comprising at least one group of first network clocks having a local clock, belonging to a link-by-link synchronization domain in which they communicate in a link-by-link (or hop-by-hop) synchronization scheme and capable of communicating in an end-to-end synchronization scheme with a master clock providing a frequency reference for synchronizing the local clocks associated to the first network clocks. This method comprises:
- a step (i) during which one collects datasets (or attributes) of the local clocks of the group,
- a step (ii) during which one compares these collected clock datasets (or attributes) to determine the best one according to at least one criterion, then one selects the first network clock offering this best clock dataset, and
- a step (iii) during which only the selected first network clock (of the link-by-link synchronization domain) is configured as a frequency synchronization gateway for interconnecting the master clock in an end-to-end synchronization domain by using a domain identifier of an end-to-end synchronization domain comprising this master clock.

The method according to the invention may include additional characteristics considered separately or combined, and notably:
- the end-to-end domain and the link-by-link synchronization domain comprising the first network clocks may be identified by different synchronization domain identifiers;
- the end-to-end synchronization scheme may be supported by the IEEE 1588V2 protocol deployed between the master clock and the frequency synchronization gateway;
- the link-by-link synchronization scheme may be supported by the IEEE 1588V2 protocol deployed in the group of the first network clocks and assisted by a full deployment of boundary clocks;
   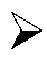 the end-to-end IEEE1588V2 synchronization domain and the link-by-link IEEE1588V2 synchronization domain of the group may be logically separated by different domain identifiers;
- the selected first network clock may be announced as a GrandMaster of a link-by-link synchronization domain, which is isolated by a SiteName domain identifier;
- in a variant, the end-to-end synchronization scheme may be supported by the IETF Network Time Protocol deployed between the master clock and the frequency synchronization gateway;
- also in a variant the link-by-link synchronization scheme may be supported either by synchronous Ethernet or by SONET/SDH deployed in the group of the first network clocks;
- a Type Length Value field may be used within signalling messages for exchanging the clock datasets related to first network clocks of the link-by-link synchronization domain;
   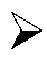 the link-by-link synchronization domain identifier SiteName may be transported by signalling messages within a Type Length Value Field;
- in step (i) the first network clocks of a group may transmit signaling messages carrying clock dataset so that at least one first network clock of this group is able to determine the best network clock of this group and to inform this best network clock so that it becomes the frequency synchronization gateway;
- the selection of the best network clock of a group may result from a comparison of network clock datasets comprising at least a priority attribute or a clock stability attribute;
- in step (i) the first network clocks may transmit clock datasets by means of PTP announce messages;
- in step (iii) one port of the selected first network clock may be configured as a PTPV2 slave clock for locking to the master clock of the end-to-end synchronization domain;
- during step (iii) once a first network clock is informed that it is the frequency synchronization gateway, it may transmit a PTP unicast negotiation message to the second network element, and then may inform every other first network clock of its group of the fact that it is the local frequency reference of the link-by-link synchronization domain;
- in a first embodiment, during step (i) each first network clock may transmit its own clock dataset to each other first network clock that is its direct neighbor, and during step (ii) each first network clock may compare a received clock dataset with its own clock dataset to select the best one, then may transmit this best clock dataset to its direct neighbor(s) for comparison with its (their) own clock dataset, and so on until every first network clock transmits the same best clock dataset to its direct neighbor(s), and finally, after a bounded convergence time the first network clock having a clock dataset identical to this same best clock dataset becomes the frequency synchronization gateway/proxy;
- in a second embodiment, during step (i) each first network clock may transmit its own clock dataset to every other first network clock of its group, and in step (ii) the first network clock having a clock dataset that is better than every other received clock dataset may become the frequency synchronization gateway;
- in a third embodiment, during step (i) each first network clock may transmit its own clock dataset to a designated network node, and in step (ii) this designated network node may compare all the clock datasets of the group to determine the best one and then may inform the first network clock having this best clock dataset that it is the frequency synchronization gateway (and/or may inform the master clock of the selected first network clock);
   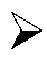 the designated network node may be either a predefined first network clock or a centralized managing equipment or else the master clock;
   - the predefined first network clock may be the one having been the most recently installed into the mobile network;
- during step (ii) if a first criterion having a maximal precedence does not allow to differentiate at least two clock datasets, one may use a second criterion having a smaller precedence to try to differentiate these clock datasets, and so on with other criteria with always smaller precedence until a differentiation occurs;
- each criterion may be chosen from a criteria group comprising at least a comparison of values of first priority fields of the clock datasets, a comparison of values of local clock classes of the clock datasets, a comparison of values of local clock accuracies of the clock datasets, a comparison of values of local clock stabilities of the clock datasets, a comparison of values of second priority fields of the clock datasets, and a comparison of values of local clock identities of the clock datasets;
- during step (i) one may collect the clock datasets by means of PTP announce messages.

The invention also provides a computer program product comprising a set of instructions arranged, when it is executed by processing means, for performing a method such as the one above introduced to allow an automatic election of a first network clock of a mobile network as a frequency synchronization gateway.

### Brief description of the figures

Other features and advantages of the invention will become apparent on examining the detailed specifications hereafter and the appended drawings, wherein:

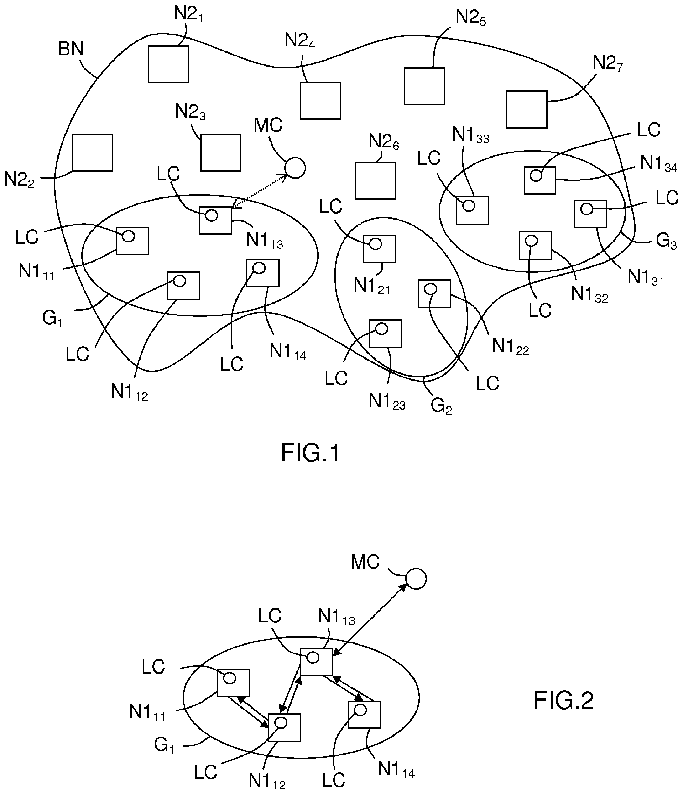

- figure 1 schematically and functionally illustrates a mobile network comprising eleven first network clocks distributed in three groups and seven second network elements,
- figure 2 schematically illustrates exchanges of messages, between the first network clocks of the first group of the mobile network of figure 1, and between a selected one of these first network clocks and a master clock, in the case of an implementation of a first example of embodiment of a method according to the invention,

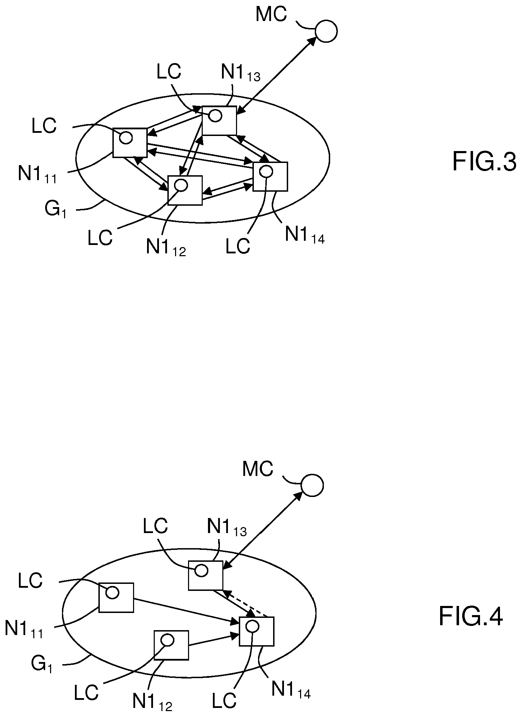

- figure 3 schematically illustrates exchanges of messages, between the first network clocks of the first group of the mobile network of figure 1, and between a selected one of these first network clocks and a master clock, in the case of an implementation of a second example of embodiment of a method according to the invention, and
- figure 4 schematically illustrates exchanges of messages, between the first network clocks of the first group of the mobile network of figure 1, and between a selected one of these first network clocks and the master clock, in the case of an implementation of a third example of embodiment of a method according to the invention.

### Detailed description of the preferred embodiment

The appended drawings may serve not only to complete the invention, but also to contribute to its understanding, if need be.

The invention aims, notably, at offering a method intended for automatically selecting and configuring a first network clock N1ᵢⱼ of a group Gᵢ of first network clocks N1ᵢⱼ of a mobile network BN, so that it becomes a frequency synchronization gateway/proxy between its group Gᵢ and a master clock MC providing a frequency reference.

As illustrated in figure 1, a mobile network BN comprises at least one group Gᵢ of first network clocks N1ᵢⱼ, each having a local clock LC (slave capable), and capable of exchanging therebetween in a link-by-link scheme and capable of interconnecting with a master clock MC which provides a frequency reference to the group Gᵢ in an end-to-end scheme through - but not limited to - second network elements N2ₖ transparent to the end-to-end synchronization protocol.

It is recalled that a network clock N1ᵢⱼ is a network element having a local clock LC and performing clock recovery and distribution functions, while a second network elements N2ₖ is a network element not aware of synchronization flows.

In the following description the synchronization domain in which the first network clocks N1ᵢⱼ are capable of exchanging therebetween in a link-by-link synchronization scheme is called a local synchronization domain or link-by-link/hop-by-hop synchronization domain Gᵢ, while the whole synchronization domain, comprising the first network clocks N1ᵢⱼ, the second network elements N2ₖ and the master clock MC, is called a global synchronization domain. A synchronization domain following an end-to-end scheme deployment between a master clock MC and a first network clock N1ᵢⱼ of a group Gᵢ is called an end-to-end synchronization domain. This end-to-end synchronization domain comprises at least the second network elements N2ₖ. According to the invention this end-to-end synchronization domain may comprise at least one first network clock N1ᵢⱼ configured to be transparent to the end-to-end synchronization protocol but still supporting the link-by-link protocol in the local synchronization domain. As a consequence and according to the invention, some first network clocks N1ᵢⱼ may belong to two different synchronization domains logically separated by different domain identifiers, respectively an end-to-end synchronization domain and a link-by-link (or hop-by-hop) synchronization domain.

In the following description it will be considered, as an example, that the global synchronization domain comprises an end-to-end deployment using the IEEE 1588V2 protocol (over UDP/IPv_{4/6}) and that each local synchronization domain is a cell site comprising a link-by-link deployment using either synchronous Ethernet/TDM or PTPV2 with full link-by-link boundary clock supports, meaning that each first network clock N1ᵢⱼ supports the boundary clock feature. So, the first network clocks N1ᵢⱼ are at least PTP slave capable and SyncE (or synchronous Ethernet) or boundary clock capable according to the deployment scenario, while the second network elements N2ₖ are transparent to any synchronization signaling protocol.

Moreover, in the following description it will be considered, as an example, that each first network clock N1ᵢⱼ comprises a radio base station (or BTS). But the invention is not limited to this type of network element. Indeed, it concerns any type of network element comprising a local clock LC, and notably integrated switches or synchronization cards on BTSs or else customer equipments (CE) with likely specified clocks, for instance.

In the non-limiting illustrated example, the mobile network BN comprises seven second network elements N2ₖ (k = 1 to 7). But it could comprise any number of second network elements N2ₖ, as soon as this number is at least equal to one (1).

Moreover, in the non-limiting illustrated example, the mobile network BN comprises three groups G₁ to G₃ (i = 1 to 3). But it could comprise any number of groups Gᵢ, as soon as this number is at least equal to one (1). Each group Gᵢ belongs to a local synchronization domain which could correspond to a cell site (comprising 2G or 2,5G or 3G or else 4G type base stations) allowing mobile communication equipments to get access to the mobile network BN.

More, in the non-limiting illustrated example, the first group G₁ (i = 1) comprises four first network clocks N1₁₁ to N1₁₄ (j = 1 to 4), the second group G₂ (i = 2) comprises three first network clocks N1₂₁ to N1₂₃ (j = 1 to 3), and the third group G₃ (i = 3) comprises four first network clocks N1₃₁ to N1₃₄ (j = 1 to 4). But each group Gᵢ could comprise any number of first network clocks N1ᵢⱼ, as soon as this number is at least equal to two (2).

For instance, all the first network clocks N1ᵢⱼ of a group Gᵢ are supposed to be connected together by a physical link, either wired or wireless. Thus, SyncE/TDM-based technologies can be used to distribute the frequency reference (received from the master clock MC) to all the local (or slave) clocks LC of a group Gᵢ via the selected frequency synchronization gateway(s) of this group Gᵢ.

As mentioned above, the invention proposes notably a method intended for automatically selecting and configuring a first network clock N1ᵢⱼ of a group Gᵢ so that it becomes a frequency synchronization gateway (or proxy) between its group Gᵢ and the master clock MC, possibly through transparent second network elements (or nodes) N2ₖ.

This selection and configuration method comprises three steps (i), (ii) and (iii).

During the first step (i) datasets (or attributes) of the local clocks LC of a group Gᵢ are transmitted and collected.

During the second step (ii) these collected clock datasets (or attributes) are compared to determine the best one according to at least one criterion, then the first network clock N1ᵢⱼ offering this best clock dataset is selected.

During the third step (iii) only the selected first network clock N1ᵢⱼ (of the link-by-link synchronization domain) is configured as a frequency synchronization gateway for interconnecting the master clock MC in an end-to-end synchronization domain by using a domain identifier of an end-to-end synchronization domain comprising this master clock MC. This end-to-end synchronization domain is materialized by a dotted arrow in figure 1. So, the selected first network clock becomes a frequency synchronization gateway (or proxy) between the master clock MC and its group Gᵢ.

In the following description it is considered that the selected first network clock N1ᵢⱼ of the first group G₁ is the third one N1₁₃.

A signalling is deployed for collecting clock datasets, and especially the clock accuracy (or "clockAccuracy" field) and the clock stability (or "offsetScaledLogVariance" attributes). As a straightforward solution, this signalling can be done by means of ANNOUNCE messages as they inherently carries PTP dataset. Nevertheless, in the context of the invention, the purpose of these messages (i.e. exchanging local clock datasets) is different from the establishment of the main synchronization hierarchy regarding the exchange of the parent clock dataset (i.e. the dataset of the master clock MC).

It has to be noted that the technology deployed within a local synchronisation domain drives the reachability of ANNOUNCE messages. As an example, if a local synchronization domain comprises a PTP full boundary clock deployment in which Announce messages are terminated by boundary clocks, each message has a one-hop reachability. If this local synchronization domain is a pure or only SyncE domain, then SyncE nodes (and then first network clocks N1ᵢⱼ) can be considered as transparent to the PTP protocol.

In any case, it is preferable to isolate the local gateway selection from the global PTP hierarchy construction. Indeed, some overlapping on parameters may occur while considering the semantics of parameters carried by Announce messages (as an example if a gateway fails then the "clockclass" parameter of the parent dataset is locally updated and there is no mean to differentiate this local event to the loss of the PRC traceability if this event occurs). For this (isolation) purpose a different domain ID shall be used for local PTP messages, for instance domain Number = 16 (note that PTPV2 standard default domain Number is 0 and the ITU-T G.8265.1 Telecom profile default domain Number is 4 - these domain numbers are to be implemented at the global synchronization domain).

In the case where PTPV2 is used, during step (iii) one port of the selected first network clock N1ᵢⱼ is configured as a PTPV2 slave clock for locking to the master clock MC of the end-to-end synchronization domain.

It is also to be noted that a new SiteName TLV ("Type Length Value") structure can be defined for generic cases and appended to all PTP local messages to make it possible for other local synchronization domains or for elements supporting the end-to-end synchronization deployment to filter out or ignore PTP messages coming from a given local site (e.g. in case of mis-configuration of the following preferred configuration). However, in a preferred embodiment, the first network clocks N1ᵢⱼ belonging to a local site and PTP-boundary clock aware can be configured to not forward the (local) messages out of the local site.

It is also important to note that different domain numbers can be used to segregate PTP flows between the global (PTP) synchronization domain and local (PTP) synchronization domains, and the new SiteName TLV structure can be used to delineate PTP flows and especially Announce messages which could be multicasted between different local sites.

An example of new SiteName TLV structure is given hereafter.

| Bits | Octets | Offset |
|---|---|---|
| 7 6 5 4 3 2 1 0 | | |
| tlvType = experimental value | 2 | 0 |
| lengthField = 6+N | 2 | 2 |
| organisationld = Alcatel-Lucent | 3 | 4 |
| organisationSubType = 0x000001 | 3 | 7 |
| siteName = "Site A" | N | 10 |

In order to isolate a local gateway decision from an eventual global PTPV2 BMCA ("Best Master Clock Algorithm") decision, a separate set of Data Sets (DSs) can be implemented. The Data Sets of this separate set can be called "local" Data Sets, for instance. In this case the main fields of the global synchronization domain can be "defaultDS" and "parentDS", and the main fields of a local synchronization domain can be "defaultLocalDS" and "parentLocalDS".

The parameter values of the "defaultDS.clockQuality" field are not necessarily the same as those of the "defaultLocalDS.clockQuality" field. For instance, a first network clock N1ᵢⱼ can be configured to be slave-only in the global synchronization domain (e.g. defaultDS.clockQuality.clockClass = 255) while it can be configured to be potentially a clock master (or GrandMaster) in its local synchronization domain (e.g. defaultLocalDS.clockQuality.clockClass = 127).

However, in order to provide redundancy feature within local synchronization domains, it is proposed, as a possible embodiment, to change the parameter values of a local defaultLocalDS field when the selected gateway encounters issue to recover the reference frequency within the global synchronization domain.

For instance, if the selected gateway received from the clock master MC a noisy (high packet jitter) synchronization signal out of its input noise tolerance, then it can degrade the precedence of its local first priority field ("priority1" - defaultLocalDS.priority1 = defaultLocalDS.priority1 + n, with n configurable) or alternatively the precedence of its local clock quality field ("clockQuality" - e.g. defaultLocalDS.clockQuality.clockClass is degraded from 127 to 255). Otherwise, it can upgrade its local priority1 field consequently (e.g. IF defaultLocalDS.priority1 > n THEN defaultLocalDS.priority1 = defaultLocalDS.priority1 -n ENDIF).

It is also important to note that by using ANNOUNCE messages, the gateway discovery can be considered as implicit. Indeed, a gateway must support at least the PTP local clock feature, and therefore by considering the use of the PTP announce message, local clocks LC capable to transmit such ANNOUNCE messages are implicitly considered to be compliant with the ordinary clock feature. Accordingly, the local clocks LC are considered as candidates for the selection of the gateway of their group Gᵢ (or local synchronization domain).

Within a preferred embodiment, the gateway selection according to the invention assumes that the cumulated PDV induced by cell sites nodes (here network element part of N1ᵢⱼ) while configured transparent to PTP is negligible compared to the cumulated PDV carried by PTP signals incoming the cell site (or local synchronization domain) of a group Gᵢ. This assumption is realistic when one considers low/moderate PDV within a small (i.e. reduced wired network size) local synchronization domain for nodes transparent to the PTP protocol (if this local synchronization domain is based on SyncE/SONET-SDH or PTP standard Boundary Clock (or BC) then the effect of packet jitter is typically bounded and negligible with regards to the accumulated global synchronization domain PDV). So, with this assumption, the best PTP/SyncE gateway of a group Gᵢ is reduced to the first network clock N1ᵢⱼ whose local clock LC presents the best clock dataset within this group Gᵢ.

For instance, the comparison between collected clock datasets can be based on several criteria. In this case, if a first criterion having a maximal precedence does not allow to differentiate at least two clock datasets, one uses a second criterion having a smaller precedence to try to differentiate these clock datasets, and so on with other criteria with always smaller precedence until a differentiation occurs.

The criteria may concern the same fields with the same precedence rules as those used by the standard BMCA. In this case, the different criteria may be the followings (in the precedence order):
- a comparison of values of first priority fields ("priority1") of the clock datasets,
- a comparison of values of local clock classes ("clockClass" - an attribute defining a clock's TAI traceability) of the clock datasets. It is recalled that clockClass is a user configurable designation indicating that a clock belongs to an ordered set of clocks from which a master is selected,
- a comparison of values of local clock accuracies ("clockAccuracy") of the clock datasets,
- a comparison of values of local clock stabilities ("offsetScaledLogVariance") of the clock datasets,
- a comparison of values of second priority fields ("priority2") of the clock datasets. It is recalled that priority2 is a user configurable designation that provides finer grained ordering among equivalent clocks, and
- a comparison of values of local clock identities ("clockldentity") of the clock datasets. It is recalled that clockldentity is a tie-breaker based on unique identifiers.

Information on observed end-to-end PDV from the master clock MC could eventually be taken into account.

It is important to note that in the case where the selected gateways use PTP to distribute the frequency reference locally (i.e. respectively in their own group Gᵢ), they present some similarities with regards to standard boundary clocks (or BCs). However, there is an important difference: a BC recovers the frequency reference and distributes the latter to downstream PTP clocks within the same PTP synchronization domain, while the selected gateway supports the distribution of a frequency reference across two different PTP synchronization domains (i.e. an end-to-end synchronization domain and a link-by-link/hop-by-hop synchronization domain). Thus, the selected gateway participates into two independent and potentially different procedures of establishing network clock topology (i.e. one within its local group Gᵢ and one within the end-to-end synchronization domain).

It is also important to note that the described gateway selection is not necessarily used for building the synchronization hierarchy of the local domain. As an illustration, within the context wherein the local frequency distribution is realized by means of SyncE/TDM-based technology, the frequency distribution topology is established accordingly to ITU-T G.8261.1/G.781 via the exchange of Synchronous Status Messages (SSMs).

This main difference has an important impact on the selection of the best first network clock N1ᵢⱼ which is intended for playing the interface between the master clock MC and the first network clocks N1ᵢⱼ of its local cell site or group Gᵢ.

At least two families of local selection can be envisaged.

A first family concerns the distributed local selections. An example of distributed local selection is illustrated in figure 2. In this example, during the first step (i) each first network clock N1ᵢⱼ of a group Gᵢ transmits its own clock dataset to each other first network clock N1ᵢⱼ, that is its direct neighbor within an announce message. A direct neighbor is a node to which another node is connected by a physical link, either wired or wireless. Then, during the second step (ii) each first network clock N1ᵢⱼ of a group Gᵢ compares a received clock dataset with its own clock dataset to select the best one, then transmits this best clock dataset to its direct neighbor(s) within announce message(s) for comparison with its own clock dataset, and so on until every first network clock N1ᵢⱼ transmits the same best clock dataset to its direct neighbors within announce message(s). Finally, after a bounded convergence time, the first network clock N1ᵢⱼ having a clock dataset identical to this same best clock dataset becomes the frequency synchronization gateway.

As previously described, a specific domain Id is assigned for this local selection and the parent dataset usually sent within an ANNOUCE message is replaced by a clock dataset of a local clock LC.

A second family concerns the centralized selections. In this case, the local synchronization domain technology can be either SyncE or legacy TDM (SDH/SONET, E1/T1) or else a mix of these two above mentioned technologies. It is noted here that once the gateway is selected, the SyncE/TDM synchronization distribution hierarchy can be automatically established based on Synchronization Status Messages (SSMs).

A first example of a centralized selection is illustrated in figure 3. In this first example, during the first step (i) each first network clock N1ᵢⱼ of a group Gᵢ transmits its own clock dataset to every other first network clock N1_{ij'} of its group Gᵢ, and during the second step (ii) the first network clock N1ᵢⱼ having a clock dataset that is better than every other received clock dataset becomes the frequency synchronization gateway and self-configures for taking over this role.

In this first example it is considered that the intermediate nodes of a group Gᵢ (i.e. the ones that are not first network clocks N1ᵢⱼ) are transparent to Announce messages.

For instance, once selected the frequency synchronization gateway immediately transmits a Unicast Negociation message towards the master clock MC of the global network synchronization domain.

A second example of a centralized local selection is illustrated in figure 4. In this second example, during the first step (i) each first network clock N1ᵢⱼ of a group Gᵢ transmits its own clock dataset to a designated network node, and during the second step (ii) this designated network node compares all the clock datasets of this group Gᵢ to determine the best one and then informs the first network clock N1ᵢⱼ having this best clock dataset that it is the frequency synchronization gateway.

The designated network node may be either a predefined first network clock N1_{ij'} of the considered group Gᵢ or a centralized managing equipment of the mobile network BN or else the master clock MC.

In the case where the designated network node is a predefined first network clock N1_{ij'}, the latter (N1_{ij'}) may be, by default, the one having been the most recently installed into the mobile network BN (because it is supposed to have the best clock quality).

Whatever the designated network node, it informs the (s)elected gateway by means of an ANNOUNCE message or a Management message. In this second example, the first network clock N1₁₃ that receives an ANNOUNCE/Management message is considered as the (s)elected gateway.

Once (s)elected, the gateway N1₁₃ sends relevant messages for the establishment of the overall synchronization hierarchy, and notably a PTP Unicast Negociation message towards the master clock MC of, and Announce or SSM (Quality Level) messages to the first network clocks N1_{ij'} (j' ≠ 3) of its local synchronization domain or group Gᵢ. If SyncE/SONET-SDH is deployed within this local synchronization domain or group Gᵢ, then mapping rules of the ITU-T G.8261.1 apply.

The traceability of the selected gateway N1₁₃ to the frequency reference (e.g. parentDS.clockQuality.clockClass = 68) within the global synchronization domain should be mapped to the local SyncE/E1/T1 Synchronization Status Message (SSMs) (e.g. SSM Quality Value QL = 0010).

In case of a local synchronization domain wherein synchronization is supported by PTP boundary clocks, Announce messages carrying local clock datasets in the link-by-link synchronization domain can be logically isolated to the end-to-end synchronization domain and to other link-by-link synchronization domains by using a SiteName TLV. Once a first network clock Nᵢⱼ is selected, it plays the role of a GrandMaster Clock in the local synchronization domain (i.e. bounded regarding the use of this local SiteName identifier) so that the synchronization hierarchy of the local synchronization domain is self-configured by the aforementioned selection process. Similarly this selected first network clock Nᵢⱼ is announced as a slave of the end-to-end synchronization domain by sending, for instance, a Unicast_request message to the (Grand)Master clock MC (i.e. the one having the actual frequency reference) by using the synchronization domain identifier of the end-to-end synchronization domain.

Regarding the scalability issue related to the length of the PTPV2 Domain_Id used within the header of the PTPV2 messages (255 values), a Type Length Value field extension is proposed for addressing high number of local synchronization domains referring to cell sites.

The invention allows optimizing the frequency accuracy of all clocks. It allows also an automatic configuration of the synchronization hierarchy from the reference master clock towards each base station (whatever its type (2G, 2,5G, 3G or 4G)). Moreover, it is self-adaptable because the configuration of the synchronization architecture takes into account the adding or removal of any network element or synchronization clock, as well as failure events.

The invention is not limited to the embodiments of method described above, only as examples, but it encompasses all alternative embodiments which may be considered by one skilled in the art within the scope of the claims hereafter.

## Claims

1. Method for automatically selecting a first network clock (N1ᵢⱼ) of a mobile network (BN) comprising at least one group (Gᵢ) of first network clocks each having a local clock (LC), belonging to a link-by-link synchronization domain in which they communicate in a link-by-link synchronization scheme and capable of communicating in an end-to-end synchronization scheme with a master clock (MC) providing a frequency reference for synchronizing said local clocks (LC), said method comprising, in this order, a step (i) of collecting datasets of the local clocks (LC) of said group (Gᵢ), a step (ii) of comparing said collected clock datasets to determine the best one according to at least one criterion, then selecting the first network clock (N1ᵢⱼ) offering said best clock dataset, and a step (iii) of configuring said selected first network clock (N1ᵢⱼ) as a frequency synchronization gateway for interconnecting said master clock (MC) in an end-to-end synchronization domain by using a domain identifier of an end-to-end synchronization domain comprising said master clock (MC).

2. Method according to claim 1, wherein said end-to-end domain and said link-by-link synchronization domain comprising said first network clocks are identified by different synchronization domain identifiers.

3. Method according to one of claims 1 and 2, wherein said end-to-end synchronization scheme is supported by the IEEE 1588V2 protocol deployed between said master clock (MC) and said frequency synchronization gateway.

4. Method according to one of claims 1 to 3, wherein said link-by-link synchronization scheme is supported by the IEEE 1588V2 protocol deployed in said group (Gᵢ) and assisted by a full deployment of boundary clocks.

5. Method according to one of claims 1 to 4, wherein said selected first network clock (N1ᵢⱼ) is announced as a GrandMaster of a link-by-link synchronization domain, which is isolated by a SiteName domain identifier.

6. Method according to one of claims 1 and 2, wherein said end-to-end synchronization scheme is supported by the IETF Network Time Protocol deployed between said master clock (MC) and said frequency synchronization gateway.

7. Method according to one of claims 1 to 3, wherein said link-by-link synchronization scheme is supported either by synchronous Ethernet or by SONET/SDH deployed in said group (Gᵢ).

8. Method according to one of claims 1 to 7, wherein a Type Length Value field is used within signalling messages for exchanging said clock datasets related to first network clocks of said link-by-link synchronization domain.

9. Method according to the combination of claims 5 and 8, wherein said link-by-link synchronization domain identifier SiteName is transported by signalling messages within a Type Length Value Field.

10. Method according to one of claims 1 to 9, wherein in step (i) transmitting by said first network clocks of a group (Gᵢ) signaling messages carrying clock dataset so that at least one first network clock (N1ᵢⱼ) of said group (Gᵢ) is able to determine the best network clock of said group (Gᵢ) and to inform said best network clock so that it becomes said frequency synchronization gateway.

11. Method according to one of claims 1 to 10, wherein the selection of the best network clock of a group (Gᵢ) results from a comparison of network clock datasets comprising at least a priority attribute or a clock stability attribute.

12. Method according to one of claims 1 to 11, whereinin step (i) transmitting by said first network clocks clock datasets by means of Precision Time Protocol announce messages.

13. Method according to one of claims 1 to 12, whereinin step (iii) once a first network clock (N1ᵢⱼ) is informed that it is said frequency synchronization gateway, transmitting a PTP unicast negotiation message to said master clock (MC), and then informs every other first network clock of its group (Gᵢ) of the fact that it is the local frequency reference of said link-by-link synchronization domain (Gᵢ).

14. Computer program product comprising a set of instructions arranged, when it is executed by processing means, for performing the method according to one of the preceding claims to allow an automatic selection of a first network clock (N1ᵢⱼ) of a mobile network (BN) in order it becomes a frequency synchronization gateway.

## Patentansprüche

1. Verfahren zum automatischen Auswählen einer ersten Netzwerkuhr (N1ᵢⱼ) eines mobilen Netzwerks (BN), umfassend wenigstens eine Gruppe (Gᵢ) von ersten Netzwerkuhren, wobei jedes eine lokale Uhr (LC) aufweist, die zu einer Link-by-Link-Synchronisationsdomäne gehört, bei der sie in einem Link-by-Link-Synchronisationsschema kommunizieren und in der Lage sind, in einem End-to-End-Synchronisationsschema mit einer Mutteruhr (MC) zu kommunizieren, die eine Frequenzreferenz zum Synchronisieren der genannten lokalen Uhren (LC) bereitstellt, wobei das genannte Verfahren in dieser Reihenfolge umfasst: einen Schritt (i) zum Erfassen von Datensätzen der lokalen Uhren (LC) der genannten Gruppe (Gᵢ), einen Schritt (ii) zum Vergleichen der genannten erfassten Uhrdatensätze zum Bestimmen des besten gemäß wenigstens einem Kriterium, dann Auswählen der ersten Netzwerkuhr (N1ᵢⱼ), die den genannten besten Datensatz bietet, und einen Schritt (iii), der die genannte ausgewählte erste Netzwerkuhr (N1ᵢⱼ) als ein Frequenzsynchronisations-Gateway zum Verbinden der genannten Mutteruhr (MC) in einer End-to-End-Synchronisationsdomäne durch Verwenden einer Domänenkennung einer End-to-End-Synchronisationsdomäne konfiguriert, die die genannte Mutteruhr (MC) umfasst.

2. Verfahren gemäß Anspruch 1, wobei die genannte End-to-End-Domäne und die genannte Link-by-Link-Synchronisationsdomäne, die die genannten ersten Netzwerkuhren umfasst, durch unterschiedliche Synchronisations-Domänenkennungen identifiziert sind.

3. Verfahren gemäß einem der Ansprüche 1 und 2, wobei das genannte End-to-End-Synchronisationsschema von dem IEEE 1588V2-Protokoll unterstützt wird, das zwischen der genannten Mutteruhr (MC) und dem genannten Frequenzsynchronisations-Gateway ausgerollt wird.

4. Verfahren gemäß einem der Ansprüche 1 bis 3, wobei das genannte Link-by-Link-Synchronisationsschema durch das IEEE 1588V2-Protokoll unterstützt wird, das in der genannten Gruppe (Gi) ausgerollt und durch ein vollständiges Ausrollen von Abgrenzungsuhren gefördert wird.

5. Verfahren gemäß einem der Ansprüche 1 bis 4, wobei die genannte erste Netzwerkuhr (N1ᵢⱼ) als eine "GrandMaster" einer Link-by-Link-Synchronisationsdomäne angekündigt wird, die durch eine "SiteName"-Domänenkennung isoliert wird.

6. Verfahren gemäß einem der Ansprüche 1 und 2, wobei das genannte End-to-End-Synchronisationsschema durch das IETF Netzwerk-Zeitprotokoll unterstützt wird, das zwischen der genannten Mutteruhr (MC) und dem genannten Frequenzsynchronisations-Gateway ausgerollt wird.

7. Verfahren gemäß einem der Ansprüche 1 bis 3, wobei das genannte Link-by-Link-Synchronisationsschema entweder durch ein taktgesteuertes Ethernet oder durch ein in der genannten Gruppe (Gᵢ) ausgerolltes SONET/SDH unterstützt wird.

8. Verfahren gemäß einem der Ansprüche 1 bis 7, bei dem ein Typ-Länge-Wert-Feld innerhalb von Signalgebungsnachrichten zum Austauschen der genannten Uhr-Datensätze verwendet wird, die sich auf erste Netzwerkuhren der genannten Link-by-Link-Synchronisationsdomäne beziehen.

9. Verfahren gemäß der Kombination von Anspruch 5 und 8, wobei die genannte Link-by-Link-Synchronisationsdomänenkennung SiteName durch Signalgebungsnachrichten innerhalb eines Typ-Längen-Wert-Feldes transportiert wird.

10. Verfahren gemäß einem der Ansprüche 1 bis 9, wobei in Schritt (i) das Übertragen durch die genannten ersten Netzwerkuhren einer Gruppe (Gᵢ) von Signalgebungsnachrichten Uhrdatensätze derart befördert, dass wenigstens eine erste Netzwerkuhr (N1ᵢⱼ) der genannten Gruppe (Gᵢ) geeignet ist, die beste Netzwerkuhr der genannten Gruppe (Gᵢ) zu bestimmen und die genannte beste Netzwerkuhr derart zu informieren, dass sie das genannte Frequenzsynchronisations-Gateway wird.

11. Verfahren gemäß einem der Ansprüche 1 bis 10, wobei die Auswahl der besten Netzwerkuhr einer Gruppe (Gi) aus einem Vergleich von Netzwerk-Uhrdatensätzen resultiert, die wenigstens ein Prioritätsattribut oder ein Uhrstabilitätsattribut umfassen.

12. Verfahren gemäß einem der Ansprüche 1 bis 11, wobei Schritt (i) durch die genannten ersten Netzwerkuhren Datensätze mittels Präzisionszeitprotokoll-Anzeigenachrichten überträgt.

13. Verfahren gemäß einem der Ansprüche 1 bis 12, wobei Schritt (iii) eine PTP-Unicast-Verhandlungsnachricht an die genannte Mutteruhr (MC) sendet, sobald eine erste Netzwerkuhr (N1ᵢⱼ) darüber informiert ist, dass sie das genannte Frequenzsynchronisations-Gateway ist, und dann jede andere erste Netzwerkuhr ihrer Gruppe (Gᵢ) über die Tatsache informiert, dass sie die lokale Frequenzreferenz der genannten Link-by-Link-Synchronisationsdomäne (Gᵢ) ist.

14. Computerprogramm-Produkt, umfassend einen Satz von Anweisungen zum Durchführen des Verfahrens gemäß einem der voranstehenden Ansprüche, um, wenn es durch Verarbeitungsmittel ausgeführt wird, eine automatische Auswahl einer ersten Netzwerkuhr (N1ij) eines mobilen Netzwerks (BN) zu ermöglichen, damit es ein Frequenzsynchronisations-Gateway wird.

## Revendications

1. Procédé pour sélectionner automatiquement une première horloge de réseau (N1ᵢⱼ) d'un réseau mobile (BN) comprenant au moins un groupe (Gᵢ) de premières horloges de réseau ayant chacune une horloge locale (LC), appartenant à un domaine de synchronisation liaison par liaison dans lequel elles communiquent selon un schéma de synchronisation liaison par liaison et sont capables de communiquer selon un schéma de synchronisation bout en bout avec une horloge maîtresse (MC) fournissant une référence de fréquence pour synchroniser lesdites horloges locales (LC), ledit procédé comprenant, dans cet ordre, une étape (i) de collecte d'ensembles de données des horloges locales (LC) dudit groupe (Gᵢ), une étape (ii) de comparaison desdits ensembles de données d'horloge collectés pour déterminer le meilleur en fonction d'au moins un critère, puis de sélection de la première horloge de réseau (N1ᵢⱼ) offrant ledit meilleur ensemble de données d'horloge, et une étape (iii) de configuration de ladite première horloge de réseau sélectionnée (N1ᵢⱼ) en tant que passerelle de synchronisation de fréquence pour interconnecter ladite horloge maîtresse (MC) dans le domaine de synchronisation bout en bout en utilisant un identifiant de domaine d'un domaine de synchronisation bout en bout comprenant ladite horloge maîtresse (MC).

2. Procédé selon la revendication 1, dans lequel ledit domaine bout en bout et ledit domaine de synchronisation liaison par liaison comprenant lesdites premières horloges de réseau sont identifiés par des identifiants de domaine de synchronisation différents.

3. Procédé selon l'une des revendications 1 et 2, dans lequel ledit domaine de synchronisation bout en bout est pris en charge par le protocole IEEE 1588V2 déployé entre ladite horloge maîtresse (MC) et ladite passerelle de synchronisation de fréquence.

4. Procédé selon l'une des revendications 1 à 3, dans lequel ledit domaine de synchronisation liaison par liaison est pris en charge par le protocole IEEE 1588V2 déployé dans ledit groupe (Gi) et assisté par un déploiement complet d'horloges frontières.

5. Procédé selon l'une des revendications 1 à 4, dans lequel ladite première horloge de réseau sélectionnée (N1ᵢⱼ) est annoncée comme GrandMaster d'un domaine de synchronisation liaison par liaison, qui est isolé par un identifiant de domaine SiteName.

6. Procédé selon l'une des revendications 1 et 2, dans lequel ledit schéma de synchronisation bout en bout est pris en charge par le Protocole de Temps Réseau IETF déployé entre ladite horloge maîtresse (MC) et ladite passerelle de synchronisation de fréquence.

7. Procédé selon l'une des revendications 1 à 3, dans lequel ledit schéma de synchronisation liaison par liaison est pris en charge soit par Ethernet synchrone soit par SONET/SDH déployé dans ledit groupe (Gᵢ).

8. Procédé selon l'une des revendications 1 à 7, dans lequel un champ Type-Longueur-Valeur est utilisé dans des messages de signalisation pour échanger lesdits ensembles de données d'horloge liés à des premières horloges de réseau dudit domaine de synchronisation liaison par liaison.

9. Procédé selon la combinaison des revendications 5 et 8, dans lequel ledit identifiant de domaine de synchronisation liaison par liaison SiteName est transporté par des messages de signalisation dans un Champ Type-Longueur-Valeur.

10. Procédé selon l'une des revendications 1 à 9, dans lequel l'étape (i) transmet par lesdites premières horloges de réseau d'un groupe (Gᵢ) des messages de signalisation portant un ensemble de données d'horloge de telle sorte qu'au moins une première horloge de réseau (N1ᵢⱼ) dudit groupe (Gᵢ) est capable de déterminer la meilleure horloge de réseau dudit groupe (Gᵢ) et d'informer ladite meilleure horloge de réseau de telle sorte qu'elle devienne ladite passerelle de synchronisation de fréquence.

11. Procédé selon l'une des revendications 1 à 10, dans lequel la sélection de la meilleure horloge de réseau d'un groupe (Gᵢ) résulte d'une comparaison d'ensembles de données d'horloge de réseau comprenant au moins un attribut de priorité ou un attribut de stabilité d'horloge.

12. Procédé selon l'une des revendications 1 à 11, dans lequel l'étape (i) transmet par lesdites premières horloges de réseau des ensembles de données d'horloge au moyen de messages d'annonce de Protocole de Temps de Précision.

13. Procédé selon l'une des revendications 1 à 12, dans lequel l'étape (iii), une fois qu'une première horloge de réseau (N1ᵢⱼ) est informée qu'elle est ladite passerelle de synchronisation de fréquence, transmet un message de négociation à diffusion individuelle PTP à ladite horloge maîtresse (MC), puis informe toutes les autres premières horloges de réseau de son groupe (Gᵢ) du fait qu'elle est la référence de fréquence locale dudit domaine de synchronisation liaison par liaison (Gᵢ).

14. Produit de programme informatique comprenant un ensemble d'instructions agencé, quand il est exécuté par un moyen de traitement, pour effectuer le procédé selon l'une des revendications précédentes pour permettre une sélection automatique d'une première horloge de réseau (N1ᵢⱼ) d'un réseau mobile (BN) afin qu'elle devienne une passerelle de synchronisation de fréquence.
